# EUROPEAN PATENT SPECIFICATION

(11) **EP 3 648 493 B1**
(45) Date of publication and mention of the grant of the patent: **22.02.2023**
(21) Application number: 18000843.5
(22) Date of filing: 29.10.2018
(51) Int. Cl.: H04L 9/40, H04L 9/08, H04W 12/0431, H04W 12/30

(54) **SECURE PERSONALIZATION OF A CHIP COMPRISING A SECURE EXECUTION ENVIRONMENT SUCH AS IUICC, ISSP OR TEE**
SICHERE PERSONALISIERUNG EINES CHIPS MIT SICHERER AUSFÜHRUNGSUMGEBUNG WIE IUICC, ISSP ODER TEE
PERSONNALISATION SÉCURISÉE D'UNE PUCE COMPRENANT UN ENVIRONNEMENT D'EXÉCUTION SÉCURISÉ TEL QUE L'IUICC, L'ISPP OU LE TEE

(43) Date of publication of application: 06.05.2020
(73) Proprietor: Giesecke+Devrient Mobile Security GmbH, 81677 München (DE)
(72) Inventor: WIMBÖCK, Ulrich, CA95033 Los Gatos (US)
(74) Representative: Giesecke + Devrient IP

(56) References cited:
- US-A1- 2003 026 432
- US-A1- 2003 147 536
- US-A1- 2017 039 352

## Description

### Field of the invention

The present invention relates to a personalization of a chip comprising a Secure Execution Environment, such as an iUICC, iSSP or TEE.

### Background of the invention

Currently chipset manufacturers (vendors), manufacturing chipsets for cellular mobile devices such as smartphones or smart watches, work the iUICC technology to replace the discrete eUICC in the cellular mobile devices. A cellular mobile device such as a smartphone includes a chipset comprising several chips, and therein at least an application processor and a modem (baseband processor), and possibly in addition a security processor and one or several processors for other radio connections, e.g. an NFC processor.

The iUICC is a security enclave hosting a subscriber identity module SIM for connectivity in a cellular network, in regard of connectivity in the cellular network functionally similar to a conventional security enclave for hosting SIMs, such as a plug-in SIM card or UICC or to an eUICC (embedded UICC) for soldering-in into a device, however without an own dedicated hardware form factor.

The iUICC can physically be integrated into one of the chips of the chipset of the cellular mobile device hosting the iUICC.

Scarce permanent memory is one of the main differences of a iUICC as compared to today's (U)SIM cards, UICC cards, eSEs or eUICCs where the memory used to store the secure operating system OS and to perform personalization is manufactured along with a secure microcontroller being the heart of the (U)SIM, UICC, eUICC etc..

One concept provides that a secure operating system of the iUICC and eSIMs (subscriptions profiles) execute in a secure processor of the chipset at runtime, are however permanently stored outside the secure processor in an external permanent memory NVM (e.g. flash) in an encrypted manner.

In greater detail, one way to protect an operating system and related configuration data (e.g. file system, security domain SD instances, applications (applets), ...) to be executed in an iUICC is, to store an image of the operating system and related configuration data in a permanent memory of the cellular mobile device hosting the iUICC in an encrypted way, encrypted by a secret image protection key. By this measure it is guaranteed that the operating system and configuration data cannot be tampered. The image protection key is stored within the chip in a manner that only the secure processor dedicated to execute the secure operating system and the eSIMs can access the image protection key and thus decrypt the content included in the memory. In addition, it is possible that a code of the operating system OS and the personalization data are stored in different areas of the memory using different keys.

Right now, no adopted standards are available addressing the iUICC or iSSP technology.

However, [3] ETSI Smart Secure Platform (SSP) defines a Secure Execution Environment, the Smart Secure Platform SSP, which can build a basis for an integrated SSP, iSSP.

Some technical aspects and challenges will now be outlined on the example of an iUICC, are however applicable similarly to iSSP and TEE.

One of the challenges expected in using iUICC is that the memory to host the secure operating system and also installed applications (applets) (e.g. eSIMs, payment applications, ticketing applications, loyalty applications and other applications) is not available during the manufacturing process of the iUICC (at least for some iUICC implementations). There is only very limited memory available in the iUICC itself to store data permanently. The memory available is expected to be not large enough for hosting a secure operating system, but only to host a few variables, or in best case a few variables and a secure bootloader.

In cases where the iUICC does not have enough memory during manufacturing to load the secure operating system OS into the chip, special mechanisms need to be established to load the secure operating system OS once the memory is available (expected when the chip is built into the hardware board with the memory).

One of the challenges of adoption of iUICC technology for chip manufacturers who plan to integrate such technology is the personalization of identities into the chips. Personalization and management of identities is not part of the chip manufacturers' processes, there is a lack of knowledge, processes and means to handle identities and personalization data. In addition, chipset manufacturers/vendors are not considered as trusted parties with respect to hosting identities.

It would be desirable for device or chipset manufacturers/vendors to establish in their hardware mechanisms allowing trusted parties to personalize identities into the chips in a secure way, thus delegating tasks to be performed by a trusted party to such a trusted party. As of now such technology is not defined and available. Also, it would be desirable for device manufacturers to be enabled to load sensitive contents like identities, operating systems for iUICCs and eSIMs to chips of chipsets already implemented in devices, without the need to provide a security infrastructure for protecting the sensitive contents themselves.

According to some Global Platform provisions or standards, installation of a secure operating system can be allowable under conditions. One condition is that an initial identity seeded into the chip in a reliable manner. Another condition is that the complete secure operating system OS is to be processed via a bootloader of the chip which takes a considerable amount of time.

The prior art document WO01/48974A1 discloses a splitting method by which secret data of a data carrier are split up into at least three parts, so as to mask the secret data against Differential Power Analysis (DPA) attacks. For example, a random number is split up into an integer result of a division, a rest of the division and the random number itself.

The document US 2003/026432 A1 discloses a method of controlling content usage in a personal communication device using a decryption key that is divided into a plurality of key-shares. The document US 2017/039352 A1 discloses a semiconductor device that processes communication signals with a first transistor logic and a second transistor logic, wherein the second transistor logic includes functionality that is ready to process secure communication signals.

### Objective of the invention

It is an object of the present invention to provide a method for secure enabling of a chip, so as to enable personalization of the chip with an identity, operating system, eSIMs and credentials at a chip or device manufacturer

### Summary of the invention

In greater detail, the object of the invention is achieved by a method with the following features, according to claim 1. Embodiments of the invention are presented in dependent claims.

According to the invention, an image protection key and an image protection key identifier are provided at an identity and credential server operated by a trusted party. The image protection key is preferably a symmetric key. The image protection key is provided for encrypting an operating system of a Secure Execution Environment, particularly an iUICC or iSSP, or of an image of an eSIM. The image protection key is masked by splitting the image protection key into a first key-component and second key-component. Then, only the first key-component is provided to a chip manufacturer production server. The first key-component alone is useless and cannot be used for encrypting images nor for decrypting encrypted images. The first key-component and the image protection key identifier are downloaded from the chip manufacturer production server to the chip and implemented in the chip. The image protection key identifier can later be used to identify and load the correct second key-component matching with the first key-component. With this key installation, the chip is incompletely provided with keys yet and not yet ready to be programmed with images of an operating system of a Secure Execution Environment (e.g. an iUICC or iSSP) or with images of eSIMs. Usually, as a next step, the chip is provided from the chip manufacturer production site to a device manufacturer production site. After this, at the device manufacturer production site, the chip is implemented into the device, for example a cellular mobile device such as a smartphone or a smart watch. Next, according to the invention, the second key-component and the image protection key identifier are provided to a device manufacturer production server which is not accessible by the chip manufacturer production server or / and vice-versa. Said non-accessibility ensures that neither the chip manufacturer production server nor the device manufacturer production server can reconstruct the image protection key by combining the first and second key components. At the device manufacturer production server, from the chip, the image protection key identifier downloaded in the chip is retrieved and the two key identifiers are compared, so as to identify that the second key-component belongs to the chip and the second key-component is assigned to the chip based on the retrieved image protection key identifier. Next, the second key-component is downloaded from the device manufacturer production server to the chip and implemented in the chip. Finally, in the chip, the first key-component and the second key-component are combined to reconstruct the image protection key in the chip. Thus, the chip is now enabled to receive an encrypted image of an identity, of a security operating system or of an eSIM for a Secure Execution Environment / iUICC / iSSP, decrypt the encrypted image and install the identity, the security operating system or eSIM in the chip, so as to implement an identity, operation system, or subscription profile (eSIM) in the chip, respectively. Thus, in the chip, an encrypted secure operating system image is downloaded and the image is decrypted based on the reconstructed image protection key.

The invention thus provides a means to enable to securely personalize an identity and related credentials into a Secure Execution Environment / an iUICC / iSSP. The process ensures that the credentials of the identity need not be disclosed to the chip manufacturer or to the device manufacturer in plaintext and are only known to the trusted entities managing the identity and credential provider server.

Based on the initial identity, a secure operating system OS can be loaded to enable the final Secure Execution Environment / iUICC / iSSP functionality.

In addition, the solution according to the invention provides a very efficient way to install a secure operating system on the target device with maximum performance possible. This is important to ensure the necessary performance in high volume device manufacturing lines.

Summarizing, there are three main benefits of the solution described herein.
(1) A trusted party can load identities to a chip, also to an untrusted environment within a Secure Execution Environment / within an iUICC / iSSP, without disclosing credentials of the operating system to any other party.
(2) By having control of the image protection keys, the trusted party can prepare the required images for each Secure Execution Environment/ iUICC / iSSP. This enables that the images can be directly loaded to the memory achieving maximum performance for loading the final operating system and personalization data.
(3) By loading the operating system into memory using the securely injected image protection key, also the operating system binaries are not disclosed to the chip manufacturer or OEM.

In case a chip is a chip of a secure processor, internal permanent memory of the chip is scarce, as was mentioned above. Once external permanent memory is added to the chip, the chip can be loaded with an operating system, be personalized and be loaded with eSIMs. That typically happens when the chip is built into a target device. In that step the second key-component (and if applicable second key-agreement component) is normally loaded. By this, the first and second key-components (and if applicable key-agreement components) are loaded by different parties, so that the different key-components (and if applicable key-agreement component) are split up to different parties.

To personalize a chip for a Secure Execution Environment / an iUICC / iSSP, the necessary data required to operate a secure operating system is prepared by a trusted party. For a Secure Execution Environment / an iUICC / iSSP supporting eSIM technology such data would include the so called EID, private keys and related X.509 certificates but can also include other elements (e.g. keys to manage the data within the secure operating system OS, provisioning profile credentials, ticketing application credentials, ...).

Depending on the architecture of the Secure Execution Environment / iUICC / iSSP one or multiple images are required for the personalization of the operating system (e.g. an image including the static code and another image including variable data). In other words, to arrive at full personalization, either one single image, or two or more partial images having a similar effect as compared to the single image, are loaded and implemented into the chip.

The generated individual data would normally be merged into the images required for the Secure Execution Environment / iUICC / iSSP. After that the images are protected with the respective image protection keys (encrypt, sign).

The generated images corresponding the actual Secure Execution Environment / iUICC / iSSP including the correct image protection keys in a device can be directly loaded into the memory of the device. There is no need to load them via the Secure Execution Environment / iUICC / iSSP Hardware. This results in maximum performance of loading the operating system including personalization data on the target device.

Obviously the images can even be loaded to memory before image protection keys of the Secure Execution Environment / iUICC / iSSP have been unlocked. In that case the images are only usable when the Secure Execution Environment / iUICC / iSSP has been unlocked.

The Secure Execution Environment can be embodied as an integrated Universal Integrated Circuit Card UICC, iUICC, as an integrated ETSI Smart Secure Platform SSP, iSSP, or as a trusted execution environment, TEE, in all the above identified cases.

### Brief description of the drawings

Embodiments of the invention will now be described with reference to the accompanying drawings, throughout which like parts are referred to by like references, and in which represents:
Fig. 1 a key provisioning setup involving three parties and communication events between the parties, for illustration of the invention;
Fig. 2 a setup for loading an operating system and personalization data into a chipset of a target device;
Fig. 3 a pseudo code sequence effecting loading an encrypted (personalized) operating system from a non-volatile memory internal to a chipset, however external to a chip, to a volatile working memory inside the chip, decrypting the loaded encrypted image in the volatile working memory of the chip and running the operating system in the volatile working memory of the chip.

### Detailed description of the invention

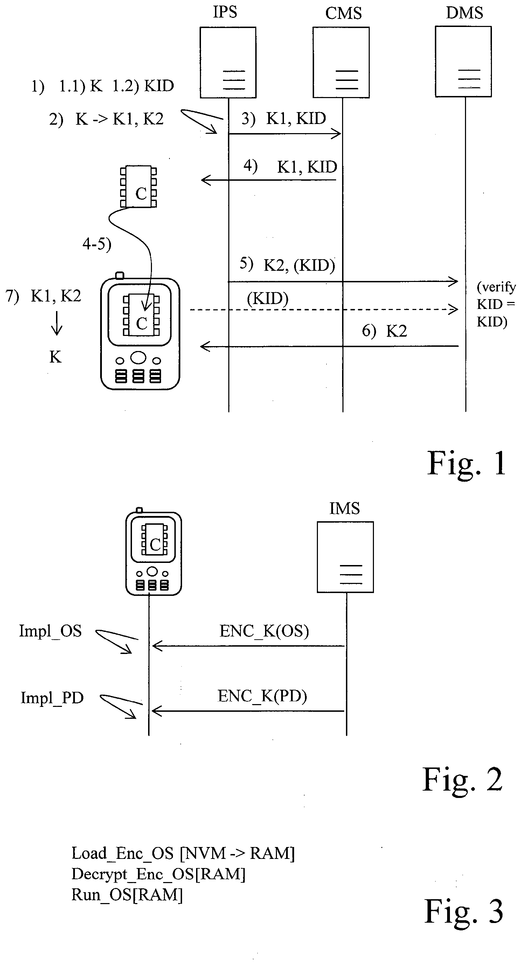

Fig. 1 shows a key provisioning setup involving three parties and a chip, and communication events between the parties and the chip, for illustration of the invention. The three parties are an identity and credential provider server IPS, a chip manufacturer production server CMS and a device manufacturer production server DMS.

The method depicted in Fig. 1 comprises the following steps:
1) at the identity and credential provider server IPS, creating:
1.1) an image protection key K, and
1.2) an image protection key identifier KID;
2) masking the image protection key K by splitting the image protection key K into a first key-component K1 and second key-component K2;
3) providing the first key-component K1 and the image protection key identifier KID to the chip manufacturer production server CMS;
4) downloading the first key-component K1 and the image protection key identifier KID from the chip manufacturer production server CMS to the chip C and implementing the downloaded first key-component K1 in the chip;
4-5) providing the chip from the chip manufacturer to the device manufacturer and implementing the chip into a device; in a typical scenario, a chip manufacturer and a device manufacturer are different parties running different production sites;
5) providing the second key-component K2 to the device manufacturer production server DMS which is not accessible by the chip manufacturer production server CMS or / and vice-versa; according to the invention also the key identifier KID is provided to the device manufacturer production server DMS; in this case, the device manufacturer production server DMS retrieves from the chip the key identifier KID stored in the chip, and compares the two key identifiers KID, so as to identify that the second key-component K2 belongs to the chip C; also, the device manufacturer production server DMS can receive several different second key-components K2 for several different chips; in this case, the key identifier KID enables assigning the correct second key-component K2 to the correct chip C;
6) downloading the second key-component K2 from the device manufacturer production server DMS to the chip C and implementing the downloaded second key-component K2 in the chip;
7) in the chip C, combining the first key-component K1 and the second key-component K2, so as to reconstruct the image protection key K in the chip C.

Fig. 2 shows a setup for loading an operating system OS into a chipset of a target device, so as to implement a non-personalized operating system, and for loading personalization data PD into said chipset of said target device, so as to personalize the operating system.

Fig. 3 shows a pseudo code sequence effecting loading an encrypted (personalized) operating system Enc_K_OS, which is encrypted by an image construction key K, from a non-volatile memory NVM internal to a chipset, however external to a chip C, to a volatile working memory RAM inside the chip C, decrypting the loaded encrypted image Enc_K_OS in the volatile working memory RAM of the chip C and running the operating system OS in the volatile working memory RAM of the chip C.

### Cited documents

[3] ETSI Smart Secure Platform (SSP)

## Claims

1. A method for secure personalization of a chip (C) of a chipset of a cellular mobile device with an identity and credentials to install a Secure Execution Environment in the chip, the method comprising the steps:
1) at an identity and credential provider server (IPS), creating:
1.1) an image protection key (K), and
1.2) an image protection key identifier (KID);
2) masking the image protection key (K) by splitting the image protection key (K) into a first key-component (K1) and second key-component (K2);
3) providing the first key-component (K1) and the image protection key identifier (KID) to a chip manufacturer production server (CMS);
4) downloading and implementing the first key-component (K1) and the image protection key identifier (KID) from the chip manufacturer production server (CMS) to the chip (C);
5) providing the second key-component (K2) and the image protection key identifier (KID) to a device manufacturer production server (DMS) which is not accessible by the chip manufacturer production server (CMS) or / and vice-versa;
5.1) at the device manufacturer production server (DMS), retrieving, from the chip, the image protection key identifier (KID) downloaded in the chip, comparing the two key identifiers (KID), so as to identify that the second key-component (K2) belongs to the chip (C) and assigning the second key-component (K2) to the chip (C) based on the retrieved image protection key identifier (KID);
6) downloading and implementing the second key-component (K2) from the device manufacturer production server (DMS) to the chip (C);
7) in the chip (C), combining the first key-component (K1) and the second key-component (K2)and reconstructing the image protection key (K)
8) in the chip, downloading an encrypted secure operating system image and decrypting the image based on the reconstructed image protection key (K).

2. The method according to claim 1, step 1) further comprising
1.3) creating key agreement components (DH, ELGamal), step 2) further creating masking the key agreement components (DH, ELGamal) by splitting them each, or at least some of them, into a first agreement-component and second agreement-component, step 3) further comprising providing the first agreement-component, step 4) further comprising downloading and implementing the first agreement-component, step 5) further comprising providing the second agreement-component, step 6) further comprising downloading and implementing the second agreement-component, and step 7) further comprising combining the first and second agreement-component, so as to reconstruct the key agreement components (DH, ELGamal) in the chip (C).

3. The method according to claim 1 or 2, step 5) further comprising providing the image protection key identifier (KID) to the device manufacturer production server (DMS), and step 6) further comprising retrieving the image protection key identifier (KID) from the chip before downloading the second key-component (K2) to the chip; the method further comprising, at the device manufacturer production server (DMS), using the image protection key identifier (KID) received in step 5) and the image protection key identifier (KID) retrieved in step 6) for assigning the second key-component (K2) to a chip (C) comprising the matching first key-component (K1).

4. The method according to any of claims 1 to 3, step 6) further comprising an authentication between the device manufacturer production server (DMS) and the chip (C), particularly an authentication of the device manufacturer production server (DMS) versus the chip using the second key-component (K2), wherein the downloading or/ and implementing the of second key-component (K2) from the device manufacturer production server (DMS) to the chip (C) is permitted uppermost upon successful authentication.

5. The method according to any of claims 1 to 4, further comprising the step:
9) implementing the encrypted image into the chipset so as to implement in the chipset data or executable code corresponding to the image.

6. The method according to claim 5, wherein the image is loaded and implemented into a non-volatile memory located in the chipset, however located outside the chip (C).

7. The method according to claim 5 or 6, wherein step 7) combining the first key-component (K1) and the second key-component (K2), so as to reconstruct the image protection key (K) in the chip (C), is performed either before or after downloading the image to the chip.

8. The method according to any of claims 5 to 7, wherein an image is loaded which image is an image of executable code and/or of data of the operating system of the chipset or chip (C) to which the image is loaded and implemented, and wherein by implementing of the image the operating system is implemented into the chip (C) or chipset.

9. The method according to any of claims 5 to 8, wherein an image is loaded which image is an image of personalization data for an operating system of the chipset or chip (C) to which the image is loaded and implemented, and wherein by implementing of the image an operating system already present in the chip (C) or chipset is personalized by the personalization data and wherein by implementing of the personalization data.

10. The method according to any of claims 5 to 9, wherein the image comprises two or more partial images, wherein loading and implementing of the images is performed by loading and implementing the partial images.

11. The method according to any of claims 5 to 10 in combination with claim 6, further comprising a step of
10) putting into operation the operating system by a method comprising:
10-1) loading the operating system from the non-volatile memory located in the chipset, however located outside the chip (C), into a volatile working memory of the chip (C);
10-2) in the volatile working memory of the chip (C), decrypting the encrypted operating system using the reconstructed image protection key;
10-3) in the volatile working memory of the chip (C), putting the operating system into operation.

12. The method according to any of claims 1 to 11, wherein the Secure Execution Environment is an integrated Universal Integrated Circuit Card UICC, iUICC, or an integrated ETSI Smart Secure Platform SSP, iSSP, or a trusted execution environment, TEE.

## Patentansprüche

1. Verfahren zur sicheren Personalisierung eines Chips (C) eines Chipsatzes eines zellularen Mobilgeräts mit einer Identität und Berechtigungsnachweisen, um eine sichere Ausführungsumgebung in dem Chip zu installieren, wobei das Verfahren die folgenden Schritte umfasst:
1) bei einem Identitäts- und Berechtigungsnachweisanbieter-Server (IPS), Erstellen:
1.1) eines Abbildschutzschlüssels (K), und
1.2) einer Abbildschutzschlüssel-Kennung (KID);
2) Maskieren des Abbildschutzschlüssels (K) durch Aufspalten des Abbildschutzschlüssels (K) in eine erste Schlüsselkomponente (K1) und eine zweite Schlüsselkomponente (K2);
3) Bereitstellen der ersten Schlüsselkomponente (K1) und der Abbildschutzschlüssel-Kennung (KID) an einen Chip-Hersteller-Produktionsserver (CMS);
4) Herunterladen und Implementieren der ersten Schlüsselkomponente (K1) und der Abbildschutzschlüssel-Kennung (KID) vom Chiphersteller-Produktionsserver (CMS) auf den Chip (C);
5) Bereitstellen der zweiten Schlüsselkomponente (K2) und der Abbildschutzschlüssel-Kennung (KID) für einen Gerätehersteller-Produktionsserver (DMS), auf den der Chiphersteller-Produktionsserver (CMS) nicht zugreifen kann, oder / und umgekehrt;
5.1) bei dem Gerätehersteller-Produktionsserver (DMS), Abrufen der in den Chip heruntergeladenen Abbildschutzschlüssel-Kennung (KID) vom Chip, Vergleichen der beiden Schlüsselkennungen (KID), um zu erkennen, dass die zweite Schlüsselkomponente (K2) zu dem Chip (C) gehört, und Zuweisen der zweiten Schlüsselkomponente (K2) zu dem Chip (C) auf der Grundlage der abgerufenen Abbildschutzschlüssel-Kennung (KID);
6) Herunterladen und Implementieren der zweiten Schlüsselkomponente (K2) von dem Gerätehersteller-Produktionsserver (DMS) auf den Chip (C);
7) Kombinieren der ersten Schlüsselkomponente (K1) und der zweiten Schlüsselkomponente (K2) in dem Chip (C) und Rekonstruieren des Abbildschutzschlüssels (K)
8) im Chip, Herunterladen eines verschlüsselten sicheren Betriebssystemabbilds und Entschlüsseln des Abbilds auf der Grundlage des rekonstruierten Bildschutzschlüssels (K).

2. Verfahren nach Anspruch 1, wobei Schritt 1) ferner umfasst:
1.3) Erzeugen von Schlüsselvereinbarungskomponenten (DH, ELGamal),
Schritt 2) ferner Erzeugen Maskieren der Schlüsselvereinbarungskomponenten (DH, ELGamal) durch Aufspalten jeder oder zumindest einiger von ihnen in eine erste Vereinbarungskomponente und eine zweite Vereinbarungskomponente,
Schritt 3) ferner umfassend Bereitstellen der ersten Vereinbarungskomponente,
Schritt 4) ferner umfassend Herunterladen und Implementieren der ersten Vereinbarungskomponente,
Schritt 5) ferner umfassend Bereitstellen der zweiten Vereinbarungskomponente,
Schritt 6) ferner umfassend Herunterladen und Implementieren der zweiten Vereinbarungskomponente, und
Schritt 7) ferner umfassend Kombinieren der ersten und zweiten Vereinbarungskomponente, um die Schlüsselvereinbarungskomponenten (DH, ELGamal) im Chip (C) zu rekonstruieren.

3. Verfahren nach Anspruch 1 oder 2, wobei
Schritt 5) ferner Bereitstellen der Abbildschutzschlüssel-Kennung (KID) an den Gerätehersteller-Produktionsserver (DMS), und
Schritt 6) ferner Abrufen der Abbildschutzschlüssel-Kennung (KID) vom Chip vor dem Herunterladen der zweiten Schlüsselkomponente (K2) auf den Chip;
wobei das Verfahren ferner umfasst, dass an dem Gerätehersteller-Produktionsserver (DMS) die in Schritt 5) empfangene Abbildschutzschlüssel-Kennung (KID) und die in Schritt 6) abgerufene Abbildschutzschlüssel-Kennung (KID) verwendet werden, um die zweite Schlüsselkomponente (K2) einem Chip (C) zuzuordnen, der die passende erste Schlüsselkomponente (K1) umfasst.

4. Verfahren nach einem der Ansprüche 1 bis 3, wobei Schritt 6) weiterhin eine Authentifizierung zwischen dem Gerätehersteller-Produktionsserver (DMS) und dem Chip (C) umfasst, insbesondere eine Authentifizierung des Gerätehersteller-Produktionsservers (DMS) gegenüber dem Chip unter Verwendung der zweiten Schlüsselkomponente (K2), wobei das Herunterladen oder/und Implementieren der zweiten Schlüsselkomponente (K2) von dem Gerätehersteller-Produktionsserver (DMS) auf den Chip (C) erst nach erfolgreicher Authentifizierung erlaubt wird.

5. Verfahren nach einem der Ansprüche 1 bis 4, ferner umfassend den Schritt:
9) Implementieren des verschlüsselten Abbildes in dem Chipsatz, um in dem Chipsatz Daten oder einen ausführbaren Code zu implementieren, die dem Abbild entsprechen.

6. Verfahren nach Anspruch 5, wobei das Abbild in einen nichtflüchtigen Speicher geladen und implementiert wird, der sich im Chipsatz, jedoch außerhalb des Chips (C) befindet.

7. Verfahren nach Anspruch 5 oder 6, wobei Schritt 7), das Kombinieren der ersten Schlüsselkomponente (K1) und der zweite Schlüsselkomponente (K2), um den Bildschutzschlüssel (K) auf dem Chip (C) zu rekonstruieren, entweder vor oder nach dem Herunterladen des Abbildes auf den Chip durchgeführt wird.

8. Verfahren nach einem der Ansprüche 5 bis 7, wobei ein Abbild geladen wird, das ein Abbild von ausführbarem Code und/oder von Daten des Betriebssystems des Chipsatzes oder Chips (C) ist, auf den das Abbild geladen und implementiert wird, und wobei durch Implementierung des Abbildes das Betriebssystem in den Chip (C) oder Chipsatz implementiert wird.

9. Verfahren nach einem der Ansprüche 5 bis 8, wobei ein Abbild geladen wird, bei dem es sich um ein Abbild mit Personalisierungsdaten für ein Betriebssystem des Chipsatzes oder Chips (C) handelt, in den das Abbild geladen und implementiert ist, und wobei durch die Implementierung des Abbildes ein bereits in dem Chip (C) oder Chipsatz vorhandenes Betriebssystem durch die Personalisierungsdaten personalisiert wird und wobei durch die Implementierung der Personalisierungsdaten die Personalisierungsdaten in den Chipsatz oder Chipsatz implementiert werden.

10. Verfahren nach einem der Ansprüche 5 bis 9, wobei das Abbild zwei oder mehr Teilabbilder umfasst, wobei das Laden und Implementieren der Abbilder durch Laden und Implementieren der Teilabbilder erfolgt.

11. Verfahren nach einem der Ansprüche 5 bis 10 in Kombination mit Anspruch 6, ferner umfassend einen Schritt
10) Inbetriebsetzen des Betriebssystems durch ein Verfahren, das umfasst:
10-1) Laden des Betriebssystems aus dem nichtflüchtigen Speicher, der sich im Chipsatz, jedoch außerhalb des Chips (C) befindet, in einen flüchtigen Arbeitsspeicher des Chips (C);
10-2) Entschlüsseln des verschlüsselten Betriebssystems im flüchtigen Arbeitsspeicher des Chips (C) unter Verwendung des rekonstruierten Bildschutzschlüssels;
10-3) Inbetriebsetzen des Betriebssystems im flüchtigen Arbeitsspeicher des Chips (C).

12. Verfahren nach einem der Ansprüche 1 bis 11, wobei die sichere Ausführungsumgebung eine integrierte Universal Integrated Circuit Card UICC, iUICC, oder eine integrierte ETSI Smart Secure Platform SSP, iSSP, oder eine vertrauenswürdige Ausführungsumgebung, TEE, ist.

## Revendications

1. Procédé destiné à une personnalisation sécurisée d'une puce (C) d'un jeu de puces d'un dispositif mobile cellulaire avec une identité et une accréditation afin d'installer un environnement d'exécution sécurisé (SEE, Secure Execution Environment) dans la puce, le procédé comprenant les étapes suivantes :
1) sur un serveur fournisseur d'identité et d'accréditation (IPS), créer :
1.1) une clé de protection à image (K), et
1.2) un identifiant de clé de protection à image (KID) ;
2) masquer la clé de protection à image (K) en divisant la clé de protection à image (K) en un premier composant de clé (K1) et second composant de clé (K2) ;
3) fournir le premier composant de clé (K1) et l'identifiant de clé de protection à image (KID) à un serveur de production de fabricant de puce (CMS, Chip Manufacturer Server) ;
4) télécharger et mettre en oeuvre le premier composant de clé (K1) et l'identifiant de clé de protection à image (KID) du serveur de production de fabricant de puce (CMS) vers la puce (C) ;
5) fournir le second composant de clé (K2) et l'identifiant de clé de protection à image (KID) à un serveur de production de fabricant de dispositif (DMS, Device Manufacturer production Server), lequel n'est pas accessible par le serveur de production de fabricant de puce (CMS), et/ou inversement ;
5.1) sur le serveur de production de fabricant de dispositif (DMS), extraire, à partir de la puce, l'identifiant de clé de protection à image (KID) téléchargé dans la puce, comparer les deux identifiants de clé (KID), de manière à identifier que le second composant de clé (K2) appartient à la puce (C) et attribuer le second composant de clé (K2) à la puce (C) sur la base de l'identifiant de clé de protection à image extrait (KID) ;
6) télécharger et mettre en oeuvre le second composant de clé (K2) du serveur de production de fabricant de dispositif (DMS) vers la puce (C) ;
7) dans la puce (C), combiner le premier composant de clé (K1) et le second composant de clé (K2), et reconstruire la clé de protection à image (K), et
8) dans la puce, télécharger une image de système d'exploitation sécurisée et chiffrée, et déchiffrer l'image sur la base de la clé de protection à image reconstruite (K).

2. Procédé selon la revendication 1, l'étape 1) comprenant en outre l'étape pour :
1.3) créer des composants d'accord de clé (DH, ELGamal), l'étape 2) comprenant en outre l'étape pour masquer les composants d'accord de clé (DH, ELGamal) en les séparant chacun, au moins certains d'entre eux, en un premier composant d'accord et second composant d'accord, l'étape 3) comprenant en outre l'étape pour fournir le premier composant d'accord, l'étape 4) comprenant en outre l'étape pour télécharger et mettre en oeuvre le premier composant d'accord, l'étape 5) comprenant en outre l'étape pour fournir le second composant d'accord, l'étape 6) comprenant en outre l'étape pour télécharger et mettre en oeuvre le second composant d'accord, et l'étape 7) comprenant en outre l'étape pour combiner les premier et second composants d'accord, de manière à reconstruire les composants d'accord de clé (DH, ELGamal) dans la puce (C).

3. Procédé selon la revendication 1 ou 2, l'étape 5) comprenant en outre l'étape pour fournir l'identifiant de clé de protection à image (KID) au serveur de production de fabricant de dispositif (DMS), l'étape 6) comprenant en outre l'étape pour extraire l'identifiant de clé de protection à image (KID) à partir de la puce avant de télécharger le second composant de clé (K2) vers la puce, le procédé comprenant en outre, sur le serveur de production de fabricant de dispositif (DMS), l'étape pour utiliser l'identifiant de clé de protection à image (KID) reçu lors de l'étape 5) et l'identifiant de clé de protection à image (KID) extrait lors de l'étape 6) pour assigner le second composant de clé (K2) à une puce (C) comprenant le premier composant de clé concordant (K1).

4. Procédé selon l'une quelconque des revendications 1 à 3, l'étape 6) comprenant en outre une authentification entre le serveur de production de fabricant de dispositif (DMS) et la puce (C), en particulier une authentification du serveur de production de fabricant de dispositif (DMS) envers la puce à l'aide du second composant de puce (K2), dans lequel l'étape pour télécharger et/ou mettre en oeuvre le second composant de clé (K2) à partir du serveur de production de fabricant de dispositif (DMS) vers la puce (C) est permise au plus haut lors d'une authentification avec succès.

5. Procédé selon l'une quelconque des revendications 1 à 4, comprenant en outre l'étape suivante :
9) mettre en oeuvre l'image chiffrée dans le jeu de puces de manière à mettre en oeuvre, dans le jeu de puces, des données ou un code exécutable correspondant à l'image.

6. Procédé selon la revendication 5, dans lequel l'image est chargée et mise en oeuvre dans une mémoire non volatile située dans le jeu de puces, située toutefois hors de la puce (C).

7. Procédé selon la revendication 5 ou 6, dans lequel l'étape 7) pour combiner le premier composant de clé (K1) et le second composant de clé (K2), de manière à reconstruire la clé de protection à image (K) dans la puce (C), est réalisée soit avant, soit après l'étape pour télécharger l'image vers la puce.

8. Procédé selon l'une quelconque des revendications 5 à 7, dans lequel une image est chargée, laquelle image est une image d'un code exécutable et/ou de données du système d'exploitation du jeu de puces ou de la puce (C), vers lequel l'image est chargée et mise en oeuvre, et dans lequel lors de l'étape de mise en oeuvre de l'image, le système d'exploitation est mis en oeuvre dans la puce (C) ou le jeu de puces.

9. Procédé selon l'une quelconque des revendications 5 à 8, dans lequel une image est chargée, laquelle image est une image de données de personnalisation pour un système d'exploitation du jeu de puces ou de la puce (C), vers lequel l'image est chargée et mise en oeuvre, et dans lequel lors de l'étape de mise en oeuvre de l'image, un système d'exploitation déjà présent dans la puce (C) ou jeu de puces est personnalisé par les données de personnalisation, et **caractérisé par** la mise en oeuvre des données de personnalisation.

10. Procédé selon l'une quelconque des revendications 5 à 9, dans lequel l'image comprend deux images partielles, voire davantage, dans lequel les étapes de chargement et de mise en oeuvre des images est réalisée en chargeant et mettant en oeuvre les images partielles.

11. Procédé selon l'une quelconque des revendications 5 à 10 en combinaison avec la revendication 6, comprenant en outre une étape pour:
10) mettre en oeuvre le fonctionnement du système d'exploitation par un procédé comprenant les étapes suivantes :
10-1) charger le système d'exploitation à partir de la mémoire non volatile située dans le jeu de puces, toutefois située hors de la puce (C), dans une mémoire de travail volatile de la puce (C) ;
10-2) dans la mémoire de travail volatile de la puce (C), déchiffrer le système d'exploitation chiffré à l'aide de la clé de protection à image reconstruite, et
10-3) dans la mémoire de travail volatile de la puce (C), mettre le système d'exploitation en fonctionnement.

12. Procédé selon l'une quelconque des revendications 1 à 11, dans lequel
l'environnement d'exécution sécurisé (SEE, Secure Execution Environment) est une carte à puce universelle intégrée UICC (Universal Integrated Circuit Card), une iUICC, ou une SSP (Smart Secure Platform, plateforme sécurisée intelligente) ETSI intégrée, iSSP, ou un TEE (Trusted Execution Environment, environnement d'exécution sécurisé).
